(19) Europäisches Patentamt / European Patent Office / Office européen des brevets

(11) **EP 4 167 322 A1**

(12) **EUROPEAN PATENT APPLICATION**
published in accordance with Art. 153(4) EPC

(43) Date of publication:
**19.04.2023 Bulletin 2023/16**

(21) Application number: **21814515.9**

(22) Date of filing: **20.04.2021**

(51) International Patent Classification (IPC):
**H01M 4/525** (2010.01) **C01G 53/00** (2006.01)

(52) Cooperative Patent Classification (CPC):
**C01G 53/00; H01M 4/525;** Y02E 60/10

(86) International application number:
**PCT/JP2021/015959**

(87) International publication number:
**WO 2021/241078 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 JP 2020094920**

(71) Applicant: **Panasonic Intellectual Property Management Co., Ltd.**
**Osaka-shi, Osaka 540-6207 (JP)**

(72) Inventors:
• **TAKAYAMA, Tomoo**
  **Osaka-shi, Osaka 540-6207 (JP)**
• **TOCHIO, Takaya**
  **Osaka-shi, Osaka 540-6207 (JP)**
• **INOUE, Katsuya**
  **Osaka-shi, Osaka 540-6207 (JP)**
• **OGASAWARA, Takeshi**
  **Osaka-shi, Osaka 540-6207 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57) This positive electrode material comprises a lithium transition metal complex oxide which contains at least 80 mol% Ni in terms of the total mol number of metal elements excluding Li, and which has a total Co content of less than 5 mol%. The lithium transition metal complex oxide is formed as secondary particles obtained by aggregating primary particles, wherein at least one element A selected from Ca and Sr is present on the surface of the primary particles in the amount of 0.01-1 mol%, inclusive, in terms of the total mol number of the metal elements excluding Li. In addition, at least one element B selected from B, Zr, W, Al, Nb, Mo, and Ti is present on the surface of the secondary particles in the amount of 0.05-2 mol%, inclusive, in terms of the total mol number of the Ni in the complex oxide.

Figure 1

**Description**

TECHNICAL FIELD

The present disclosure relates to a positive electrode active material for a non-aqueous electrolyte secondary battery and a non-aqueous electrolyte secondary battery using the positive electrode active material.

BACKGROUND ART

In a non-aqueous electrolyte secondary battery such as a lithium-ion battery, a positive electrode active material significantly affects battery performance such as input-output characteristics, a capacity, cycle characteristics, and storage characteristics. For the positive electrode active material, a lithium-transition metal composite oxide containing metal elements such as Ni, Co, Mn, and Al, and composed of secondary particles each formed by aggregation of primary particles is commonly used. Since the positive electrode active material has significantly different properties depending on its composition, particle shape, and the like, many investigations have been made on various positive electrode active materials. In particular, a lithium-transition metal composite oxide with a high Ni content is promising as a positive electrode active material that contributes to a higher capacity of a battery.

For example, Patent Literature 1 discloses a positive electrode active material including Li, Ni, Co, Mn, and W, and having a Ni proportion of 30 mol% or more and 60 mol% or less, a Co proportion of 15 mol% or more and 35 mol% or less, a Mn proportion of 15 mol% or more and 35 mol% or less, and a W proportion of more than 0 mol% and 5 mol% or less, wherein W is unevenly distributed on a surface layer of the positive electrode active material. Patent Literature 1 also states that using this positive electrode active material improves output characteristics and cycle characteristics of a battery.

Patent Literature 2 discloses a positive electrode active material having a layered crystalline structure $Li_{1+a}M_{1-a}O_{2 \pm b}M'_k S_m$ (-0.03 < a < 0.06, b $\cong$ 0), M being a transition metal compound, consisting of at least 95% of either one or more elements of the group Ni, Mn, Co, and Ti, M' being a specific element present on the surface of an oxide. Patent Literature 2 states that using this positive electrode active material improves performance as a cathode of a lithium battery.

CITATION LIST

PATENT LITERATURE

PATENT LITERATURE 1: Japanese Unexamined Patent Application Publication No. 2016-91626
PATENT LITERATURE 2: National Publication of International Patent Application No. 2010-535699

SUMMARY

Since Co is rare and expensive, reducing the amount of Co to be used may reduce a manufacturing cost of a battery. However, reducing the Co content in a positive electrode active material with a high Ni content that contributes to a higher capacity of a battery presents a problem of increased direct current resistance (DCR) during storage of a charged battery. The non-aqueous electrolyte secondary batteries using the positive electrode active materials of Patent Literatures 1 and 2 still have room for improvement in inhibition of the increase in the DCR.

A positive electrode active material for a non-aqueous electrolyte secondary battery of an aspect of the present disclosure includes a lithium-transition metal composite oxide containing 80 mol% or more of Ni based on a total number of moles of metal elements excluding Li, and at least one selected from the group consisting of Co, Mn, Al, Ti, Nb, Fe, and Zn, and having a Co content of less than 5 mol%, wherein the lithium-transition metal composite oxide includes secondary particles each formed by aggregation of primary particles, at least one element A selected from the group consisting of Ca and Sr is present on surfaces of the primary particles in an amount of 0.01 mol% or more and 1 mol% or less based on the total number of moles of the metal elements excluding Li, and at least one element B selected from the group consisting of B, Zr, W, Al, Nb, Mo, and Ti is present on surfaces of the secondary particles in an amount of 0.05 mol% or more and 2 mol% or less based on a total number of moles of Ni in the composite oxide.

A non-aqueous electrolyte secondary battery of an aspect of the present disclosure comprises a positive electrode including the above positive electrode active material, a negative electrode, and a non-aqueous electrolyte.

According to an aspect of the present disclosure, increase in the direct current resistance during storage with charged may be inhibited in the non-aqueous electrolyte secondary battery using the positive electrode active material with a high Ni content. Using the positive electrode active material of an aspect of the present disclosure may provide, for example, a non-aqueous electrolyte secondary battery having a high capacity and excellent storage characteristics.

BRIEF DESCRIPTION OF DRAWINGS

FIG. 1 is a sectional view of a non-aqueous electrolyte secondary battery of an example of an embodiment.
FIG. 2 is a view schematically illustrating a particle cross section of a lithium-transition metal composite oxide constituting a positive electrode active material of an example of an embodiment.

DESCRIPTION OF EMBODIMENTS

As described above, the lithium-transition metal composite oxide with a high Ni content is a useful positive electrode active material that contributes to a higher capacity and higher energy density of a battery. However, in contradiction, there is a problem of large increase in the direct current resistance (DCR) during storage of a charged battery.

The present inventors have intensively investigated to solve this problem, and as a result, have found that, in a lithium-transition metal composite oxide with a high Ni content, a predetermined amount of at least one of the group consisting of Ca and Sr (element A) present on surfaces of primary particles of the composite oxide and a predetermined amount of at least one selected from the group consisting of B, Zr, W, Al, Nb, Mo, and Ti (element B) present on surfaces of secondary particles of the composite oxide specifically inhibit the increase in the DCR during storage of a charged battery.

In a positive electrode active material with a high Ni content, reducing a Co content lowers stability of an active material surface to be likely to cause a side reaction with an electrolyte liquid. It is considered that deterioration of the active material surface is then enhanced to considerably increase the DCR during storage with charged. In addition, the destabilized active material surface is likely to be corroded by HF that can be generated by a reaction of a fluorine-containing compound in an electrolyte with moisture. The positive electrode active material according to the present disclosure forms a stable protecting layer on surfaces of the secondary particles of the composite oxide by interaction with presence of both the element A and the element B, resulting in remarkable improvement in the stability of the active material surface. This seems to inhibit the reactions with the electrolyte liquid or HF on the active material surface, resulting in improved storage characteristics.

If the element A or the element B is absent, the stable protecting layer is not formed on the particle surface of the composite oxide, and the effect of the present disclosure is not obtained. As described above, only when both the element A and the element B are present, the stability of the active material surface is specifically improved. In addition, the elements A and B have to be added in appropriate amounts; if the amounts are not strictly controlled, the effect of inhibiting the increase in the DCR is not obtained, and in addition, other battery performances may deteriorate.

For example, if the amount of the element A to be added is more than 1 mol% based on a total number of moles of metal elements excluding Li in the composite oxide, a layer of the element A becomes a resistant layer, which lowers the battery capacity. If the amount of the element B to be added is more than 2 mol%, Li is abstracted from the inside of the particles of the composite oxide, and a layer of the element B becomes a resistant layer, which lowers the battery capacity, for example.

Hereinafter, an example of embodiments of the positive electrode active material for a non-aqueous electrolyte secondary battery according to the present disclosure and a non-aqueous electrolyte secondary battery using the positive electrode active material will be described in detail with reference to the drawings. It is anticipated from the beginning to selectively combine a plurality of embodiments and modified examples described below.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery), a coin-shaped exterior housing can (coin battery), or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

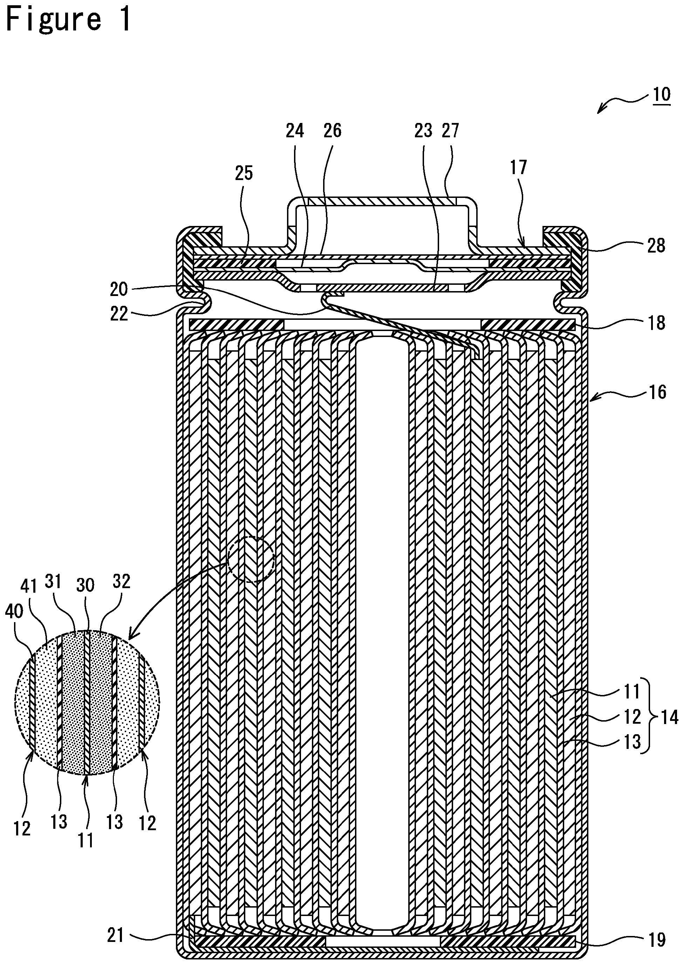

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like, and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a groove 22 in which part of a side wall thereof projects inside for supporting the sealing assembly 17 is formed. The groove 22 is preferably formed in a circular shape along a circumferential direction of the exterior housing can 16, and supports the sealing assembly 17 with the upper surface thereof. The sealing assembly 17 is fixed on the upper part of the exterior housing can 16 with the groove 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, the separator 13, and the non-aqueous electrolyte, particularly a positive electrode active material constituting the positive electrode 11, will be described in detail.

[Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. The positive electrode mixture layer 31 includes a positive electrode active material, a conductive agent, and a binder, and is preferably provided on both surfaces of the positive electrode core 30. The positive electrode 11 may be produced by, for example, applying a positive electrode mixture slurry including the positive electrode active material, the conductive agent, the binder, and the like on the positive electrode core 30, drying and subsequently compressing the applied film to form the positive electrode mixture layers 31 on both the surfaces of the positive electrode core 30.

Examples of the conductive agent included in the positive electrode mixture layer 31 may include a carbon material such as carbon black, acetylene black, Ketjenblack, graphite, and carbon nanotube. Examples of the binder included in the positive electrode mixture layer 31 may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

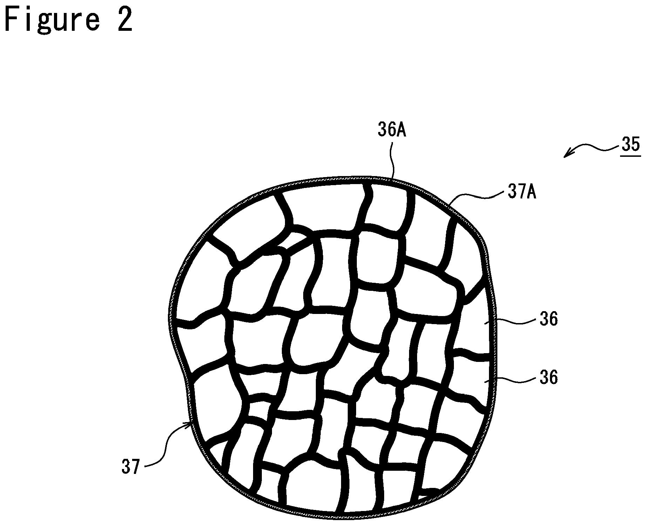

FIG. 2 is a view schematically illustrating a particle cross section of a lithium-transition metal composite oxide 35 constituting the positive electrode active material of an example of an embodiment. The positive electrode active material of the present embodiment includes a lithium-transition metal composite oxide 35 containing 80 mol% or more of Ni based on the total number of moles of the metal elements excluding Li (hereinafter, referred to as "composite oxide 35"). The composite oxide 35 further contains at least one selected from the group consisting of Co, Mn, Al, Ti, Nb, Fe, and Zn, and a Co content is less than 5 mol%. As illustrated in FIG. 2, the composite oxide 35 includes a secondary particle 37 formed by aggregation of primary particles 36.

The composite oxide 35 with a high Ni content is a useful positive electrode active material that contributes to a higher capacity and higher energy density of the battery, as described above. However, there is the problem of increase in the DCR during storage of a charged battery. In the composite oxide 35, at least one element A selected from the group consisting of Ca and Sr is present on surfaces of the primary particles 36, and at least one element B selected from the group consisting of B, Zr, W, Al, Nb, Mo, and Ti is present on surfaces of the secondary particles 37. Using this composite oxide 35 for the positive electrode active material may highly inhibit the increase in the DCR.

The positive electrode active material of the present embodiment contains the composite oxide 35 as a main component. Here, the main component means a component with the most mass proportion among materials constituting the positive electrode active material. The positive electrode mixture layer 31 may include a composite oxide other than the composite oxide 35 as the positive electrode active material within a range not impairing the object of the present disclosure, but a proportion of the composite oxide 35 is preferably 50 mass% or more, and more preferably 80 mass% or more. In the present embodiment, the description will be made with the positive electrode active material composed of substantially only the composite oxide 35. The positive electrode active material may be composed of two or more composite oxides 35 having compositions different from each other.

The composite oxide 35 preferably contains another metal element in addition to Li, Ni, and the above elements A and B. Examples of a preferable other metal element include at least one selected from the group consisting of Co, Mn, Al, Ti, Nb, Fe, and Zn. Among them, the composite oxide 35 preferably contains at least one selected from the group consisting of at least Co, Al, and Mn. A total amount of the metal elements other than Li, Ni, and the elements A and B contained in the composite oxide 35 is preferably 15 mol% or less, more preferably 10 mol% or less, and for example 5 mol% or more and 10 mol% or less based on the total number of moles of the metal elements excluding Li.

A Ni content of the composite oxide 35 is 80 mol% or more, preferably 85 mol% or more, and more preferably 90 mol% or more based on the total number of moles of the metal elements excluding Li. An upper limit of the Ni content is, for example, 95 mol%. When the Ni content is within the above range, both of the higher capacity and higher energy density of the battery and the good storage characteristics may be achieved. A preferable composite oxide 35 contains Al and Mn in an amount of 5 mol% or more and 10 mol% or less based on the total number of moles of the metal elements excluding Li. In this case, the structural stability of the composite oxide 35 increases, which contributes to the improvement in the storage characteristics. The content of each of Al and Mn is, for example, 1 mol% or more and 5 mol% or less.

A Co content of the composite oxide 35 is less than 5 mol% based on the total number of moles of the metal elements excluding Li, and the composite oxide 35 preferably contains substantially no Co. Since Co is rare and expensive, using no Co may reduce the manufacturing cost of the battery. In a positive electrode active material with a high Ni content, reducing the Co content is generally likely to increase the DCR. However, when both the elements A and B are present on the particle surface, the increase in the DCR may be inhibited even with a battery using a positive electrode active material with a low Co content or without Co. The mole fractions of the metal elements contained in the composite oxide 35 are measured by inductively coupled plasma (ICP) atomic emission spectroscopy.

The composite oxide 35 preferably has a layered rock-salt structure. Examples of the layered rock-salt structure of the composite oxide 35 include a layered rock-salt structure belonging to the space group R-3m and a layered rock-salt structure belonging to the space group C2/m. A full width at half maximum n of a diffraction peak of a (208) plane in an X-ray diffraction pattern of the composite oxide 35 is preferably $0.30° < n < 0.50°$, and more preferably $0.35° < n < 0.50°$. If n is smaller than this range, an ion diffusion pathway in the composite oxide is enlarged to deteriorate charge-discharge characteristics. If n is larger than this range, ion conduction in the composite oxide is inhibited to deteriorate charge-discharge characteristics. When the full width at half maximum n of the diffraction peak of the (208) plane is within the above range, deintercalation and intercalation of Li is performed smoothly, which improves the charge and discharge capacities.

The X-ray diffraction pattern of the composite oxide 35 is obtained by using a powder X-ray diffraction apparatus (RINT-TTR, manufactured by Rigaku Corporation, radiation source: Cu-Kα) with the following conditions.

Measuring Range: 15 to 120°
Scanning Rate: 4°/min
Analyzing Range: 30 to 120°
Background: B-spline
Profile Function: Split pseudo-Voigt function

Restricting Conditions: $Li(3a) + Ni(3a) = 1$

$$Ni(3a) + Ni(3b) = \alpha \ (\alpha \text{ represents each Ni content proportion})$$

ICSD No.: 98-009-4814

As described above, the composite oxide 35 includes the secondary particle 37 formed by aggregation of the primary particles 36. An average particle diameter of the primary particles 36 is, for example, 200 nm or more and 500 nm or less. The average particle diameter of the primary particles 36 is determined by analyzing a scanning electron microscope (SEM) image of a particle cross section observed with an SEM. For example, the positive electrode 11 is embedded into a resin to produce a cross section with cross-section polisher (CP) processing, and this cross section is photographed with the SEM. From the SEM image, 30 primary particles 36 are randomly selected to observe particle boundaries, and each major diameter (the largest major diameter) of the 30 primary particles 36 are determined to specify an average value thereof as the average particle diameter.

A median diameter on a volumetric basis (hereinafter, referred to as "D50") of the secondary particles 37 (composite oxide 35) is, for example, 1 $\mu$m or more and 30 $\mu$m or less, and preferably 5 $\mu$m or more and 20 $\mu$m or less. The D50 means a particle diameter at which a cumulative frequency is 50% from a smaller particle diameter side in a particle size distribution on a volumetric basis. The particle size distribution of the secondary particles 37 may be measured by using a laser diffraction-type particle size distribution measuring device (for example, MT3000II, manufactured by MicrotracBEL Corp.) with water as a dispersion medium.

On the surfaces of the primary particles 36 constituting the composite oxide 35, at least one element A selected from the group consisting of Ca and Sr is present in an amount of 0.01 mol% or more and 1 mol% or less based on the total number of moles of the metal elements excluding Li. The element A, which is present on the surfaces of the secondary particles 37 and on particle boundaries where the primary particles 36 are contacted with each other, is present on the surfaces of the primary particles 36 constituting the secondary particles 37 of the composite oxide 35. It is considered that the element A adheres onto the surfaces of the primary particles 36 in a compound state, and a coating layer 36A including the element A is formed on the surfaces of the primary particles 36. An element distribution on the particle cross section of the composite oxide 35 may be observed by energy dispersive X-ray spectroscopy (TEM-EDX).

The element A, for example, does not form a solid solution with Ni and the like, and is present substantially only on the surfaces of the primary particles 36. Although the element A added even at a small amount interacts with the element B to contribute to the inhibition of the increase in the DCR, adding the element A at 0.01 mol% or more based on the total number of moles of the metal elements excluding Li makes the effect remarkable. Meanwhile, if the content of the element A is more than 1 mol%, the coating layer 36A including the element A becomes a resistant layer, which lowers the discharge capacity.

The content of the element A is needed to be controlled to 0.01 mol% or more and 1 mol% or less based on the total number of moles of the metal elements excluding Li, and more preferably 0.05 mol% or more, and particularly preferably 0.1 mol% or more. An upper limit of the content of the element A is more preferably 0.9 mol%, and particularly preferably 0.8 mol% from the viewpoint of achievement of both the higher capacity and good storage characteristics of the battery. A preferable example of the content of the element A is 0.05 mol% or more and 1 mol% or less, 0.1 mol% or more and 0.9 mol% or less, or 0.1 mol% or more and 0.8 mol% or less.

On the surfaces of the secondary particles 37 of the composite oxide 35, at least one element B selected from the group consisting of B, Zr, W, Al, Nb, Mo, and Ti is present in an amount of 0.05 mol% or more and 2 mol% or less based on the total number of moles of Ni in the composite oxide 35. The element B may be present on the entire surfaces of the primary particles 36 including the inside of the secondary particles 37, similar to the element A, but is preferably substantially absent inside the secondary particles 37 and present only on the surfaces of the secondary particle 37. In this case, the increase in the DCR during storage with charged may be efficiently inhibited. It is considered that the element B evenly adheres onto the surfaces of the secondary particles 37 in a compound state to form a coating layer 37B including the element B on the surfaces of the secondary particles 37.

On the surfaces of the secondary particles 37, the element B that does not form a solid solution with Ni and the like is present. Although the element B added even at a small amount interacts with the element A to contribute to the inhibition of the increase in the DCR, adding the element B at 0.05 mol% or more based on the total number of moles of Ni in the composite oxide 35 makes the effect remarkable. Meanwhile, if the content of the element B is more than 2 mol%, Li is abstracted from the inside of the primary particles 36, and the coating layer 37B including the element B becomes a resistant layer, which lowers the discharge capacity.

The content of the element B is needed to be controlled to 0.05 mol% or more and 2 mol% or less based on the total number of moles of Ni in the composite oxide 35, and more preferably 0.06 mol% or more, and particularly preferably 0.08 mol% or more. An upper limit of the content of the element B is more preferably 1.2 mol%, and particularly preferably 1 mol% from the viewpoint of achievement of both the higher capacity and good storage characteristics of the battery. A preferable example of the content of the element B is 0.05 mol% or more and 1.2 mol% or less, 0.08 mol% or more and 1 mol% or less, 0.09 mol% or more and 1 mol% or less, or 0.1 mol% or more and 1 mol% or less.

The element B is preferably present outside the element A on the surfaces of the secondary particles 37. That is, on the particle cross section of the composite oxide 35, the element B and the element A are present in this order from the particle surface side with the layered shape. On the surfaces of the secondary particles 37, the coating layer 37B including the element B is formed so as to cover the coating layer 36A including the element A, for example. Part of the element B may directly adhere onto the surfaces of the secondary particles 37. In the present embodiment, it is considered that the presence of both the element A and the element B on the surfaces of the secondary particles 37 inhibits the reaction with the electrolyte liquid or HF, resulting in remarkable improvement in the storage characteristics.

The preferable contents of the element A and the element B are as above, and the existing ratio between the element A and the element B is also associated with the improvement in the storage characteristics. The ratio of the content of the element B to the content of the element A (B/A) is, for example, 0.05 or more and 200 or less, preferably 0.08 or more and 50 or less, more preferably 0.1 or more and 10 or less, and particularly preferably 0.16 or more and 2.2 or less on the number of moles basis. The content of the element A is, for example, higher than the content of the metal element B, and an example of the ratio (B/A) is 0.1 or more and less than 1.

A preferable example of the composite oxide 35 is represented by the composition formula $Li_\alpha Ni_\beta Co_x Al_y Mn_z A_a B_b O_2$, wherein $0.9 \leq \alpha \leq 1.2$, $0.80 \leq \beta \leq 0.95$, $0 \leq x < 0.05$, $0.01 < y \leq 0.07$, $0 \leq z \leq 0.05$, $0.0001 \leq a \leq 0.01$, and $0.0005 \leq b \leq 0.02$. The contents of the elements A and B may be substantially the same, may be a > b, or may be a < b, but are preferably smaller than the contents of Ni, Al, and Mn.

The composite oxide 35 may be produced by: a first step of obtaining a composite oxide including metal elements such as Ni and Al; a second step of mixing the composite oxide obtained in the first step, a compound including the element A, and a Li compound to obtain a mixture; a third step of calcining this mixture; and a fourth step of adding a compound including the element B to be heat-treated, for example.

In the first step, for example, with stirring a solution of metal salts including Ni, Al, and the like, a solution of an alkali such as sodium hydroxide is added dropwise in order to adjust a pH on the alkaline side (for example, 8.5 to 12.5) to precipitate (coprecipitate) a composite hydroxide including the metal elements such as Ni and Al. Then, this composite hydroxide is calcined to synthesize a composite oxide including the metal elements such as Ni and Al. The calcining temperature is not particularly limited, and for example, 300°C or higher and 600°C or lower.

In the second step, the composite oxide obtained in the first step, a compound including the element A, and a Li compound are mixed to obtain a mixture. An example of the compound including the element A includes $Ca(OH)_2$, $CaO$, $CaCO_3$, $CaSO_4$, $Ca(NO_3)_2$, $Sr(OH)_2$, $Sr(OH)_2 \cdot H_2O$, $Sr(OH)_2 \cdot 8H_2O$, $SrO$, $SrCO_3$, $SrSO_4$, and $Sr(NO_3)_2$. A particle diameter of the compound including the element A is preferably 0.1 $\mu$m or more and 20 $\mu$m or less. When the compound including the element A includes moisture, the compound may be used after a dehydration treatment such as drying to inhibit water generation during the calcination. An example of the Li compound includes $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$.

A mixing ratio between the composite oxide obtained in the first step and the Li compound is preferably, for example, within a range of 1 :0.98 to 1: 1.1 of the molar ratio of the metal elements excluding Li:Li in terms of facilitation of regulating each of the above parameters within the above specified range. A mixing ratio between the composite oxide obtained in the first step and at least one of the group consisting of a Sr compound and a Ca compound is preferably, for example, within a range of 1:0.0005 to 1:0.006 of the molar ratio of the metal elements excluding Li:(Sr + Ca) in terms of facilitation of regulating each of the above parameters within the above specified range. In the second step, other metal raw materials may be added as necessary when the composite oxide obtained in the first step, the Li compound, and the Sr compound or the Ca compound are mixed. The other metal raw materials are oxides and the like including metal elements other than the metal elements constituting the composite oxide obtained in the first step.

In the third step, the mixture obtained in the second step is calcined under an oxygen atmosphere. This step forms the coating layer 36A including the element A on the surfaces of the primary particles 36. As an example of the calcinating conditions, a heating rate within 450°C or higher and 680°C or lower is 1.0°C/minute or more and 5.5°C/minute or less, and a highest reaching temperature is 700°C or higher and 850°C or lower. The heating rate within 450°C or higher and 680°C or lower may be 0.1°C/minute or more and 5.5°C/minute or less, and may be 0.2°C/minute or more and 5.5°C/minute or less. A heating rate from 680°C to the highest reaching temperature is, for example, 0.1°C/minute or more and 3.5°C/minute or less. A holding time at the highest reaching temperature may be 1 hour or longer and 10 hours or shorter.

In the fourth step, the calcined composite oxide is mixed with a compound including the element B, and the mixture is heat-treated. This step forms the coating layer 37B including the element B on the surfaces of the secondary particles 37, and at this time, the coating layer 37B is formed on the coating layer 36A. The calcined composite oxide obtained in the third step may be washed with water with a conventionally known method. After washing with water, the compound including the element B is added in a state where a powder of the composite oxide is wet, and then the heat treatment (drying) may be performed. The compound including the element B may be added in a powder state, or may be added in a dissolved or dispersed state in water.

An example of the compound including the element B includes $WO_3$, $ZrO_2$, $B_2O_3$, $(NH_4)_2[Zr(CO_3)_2(OH)_2]$, $Al(NO_3)_3$, $Nb_2O_5$, $MoO_3$, and $TiO_2$. A particle diameter of the compound including the element B is preferably 0.1 $\mu$m or more and 20 $\mu$m or less. A temperature of the heat treatment is, for example, 150°C or higher and 300°C or lower in a vacuum atmosphere.

[Negative Electrode]

The negative electrode 12 has a negative electrode core 40 and a negative electrode mixture layer 41 provided on a surface of the negative electrode core 40. For the negative electrode core 40, a foil of a metal stable within a potential range of the negative electrode 12, such as copper, a film in which such a metal is disposed on a surface layer thereof, and the like may be used. The negative electrode mixture layer 41 includes a negative electrode active material and a binder, and is preferably provided on both surfaces of the negative electrode core 40. The negative electrode 12 may be produced by, for example, applying a negative electrode mixture slurry including the negative electrode active material, a conductive agent, the binder, and the like on the surface of the negative electrode core 40, drying and subsequently compressing the applied film to form the negative electrode mixture layers 41 on both the surfaces of the negative electrode core 40.

The negative electrode mixture layer 41 includes, for example, a carbon-based active material to reversibly occlude and release lithium ions, as the negative electrode active material. A preferable carbon-based active material is a graphite such as: a natural graphite such as flake graphite, massive graphite, and amorphous graphite; or an artificial graphite such as massive artificial graphite (MAG) and graphitized mesophase-carbon microbeads (MCMB). For the negative electrode active material, a Si-based active material composed of at least one of the group consisting of Si and a Si-containing compound may also be used, and the carbon-based active material and the Si-based active material may be used in combination.

For the conductive agent included in the negative electrode mixture layer 41, a carbon material such as carbon black, acetylene black, Ketjenblack, and graphite may be used similar to that in the positive electrode 11. For the binder included in the negative electrode mixture layer 41, a fluororesin, PAN, a polyimide, an acrylic resin, a polyolefin, and the like may be used similar to that in the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an $\alpha$-olefin, cellulose, and the like are preferable. The separator 13 may have any of a single-layered structure and a multilayered structure. On a surface of the separator 13, a heat-resistant layer including inorganic particles, a heat-resistant layer composed of a highly heat-resistant resin such as an aramid resin, a polyimide, and a polyamideimide, and the like may be formed.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ {l and m represent integers of 0 or more}. The lithium salts may be used singly, or a plurality types thereof may be mixed to be used. Among them, $LiPF_6$ is preferably used from the viewpoints of ion conductivity, electrochemical stability, and the like. A concentration of the lithium salt is, for example, 0.8 mol or more and 1.8 mol or less per litter of the non-aqueous solvent. Furthermore, vinylene carbonate, a propanesultone-based additive, and the like may be added.

EXAMPLES

Hereinafter, the present disclosure will be further described with Examples, but the present disclosure is not limited to these Examples.

<Example 1>

[Synthesis of Positive Electrode Active Material]

A composite hydroxide obtained by a coprecipitation method and containing Ni, Co, and Al was calcined at 500°C for 8 hours to obtain a composite oxide (a molar ratio between Ni, Co, and Al was 91.75:4:4) (the first step). Then, LiOH, the above composite oxide, and $Ca(OH)_2$ were mixed so that a molar ratio between Li, a total amount of Ni, Co, and Al, and Ca was 1.02:0.9975:0.0025 to obtain a mixture (the second step). This mixture was heated in an oxygen flow from a room temperature to 650°C at a heating rate of 2.0°C/minute, and then calcined from 650°C to 730°C at a heating rate of 0.5°C/minute to obtain a calcined product (the third step). The calcined product was washed with water, then a predetermined amount of tungsten oxide was added, and dried at 180°C for 1 hour to obtain a lithium-transition metal composite oxide containing the elements shown in Table 1 (positive electrode active material) (the fourth step).

The obtained positive electrode active material included secondary particles each formed by aggregation of primary particles having an average particle diameter of 350 nm, and the secondary particles had a D50 of 12 μm. It was confirmed that, from measurement results of the particle cross section with TEM-EDX, Ca was substantially uniformly present on surfaces of the primary particles, and W was substantially uniformly present on surfaces of the secondary particles. W was present on an outer side of the particles than Ca so as to cover Ca.

[Production of Positive Electrode]

The above lithium-transition metal composite oxide was used as a positive electrode active material. The positive electrode active material, acetylene black, and polyvinylidene fluoride were mixed at a predetermined solid-content mass ratio, and N-methyl-2-pyrrolidone (NMP) was used as a dispersion medium to prepare a positive electrode mixture slurry. Then, the positive electrode mixture slurry was applied on a positive electrode core made of aluminum foil, the applied film was dried and compressed, and then cut to a predetermined electrode size to obtain a positive electrode.

[Production of Negative Electrode]

A graphite, a dispersion of styrene-butadiene rubber (SBR), and sodium carboxymethylcellulose (CMC-Na) were mixed at a predetermined solid-content mass ratio, and water was used as a dispersion medium to prepare a negative electrode mixture slurry. Then, this negative electrode mixture slurry was applied on both surfaces of a negative electrode core made of copper foil, the applied film was dried and compressed, and then cut to a predetermined electrode size to produce a negative electrode in which negative electrode mixture layers were formed on both the surfaces of the negative electrode core.

[Preparation of Non-Aqueous Electrolyte Liquid]

Ethylene carbonate (EC), ethyl methyl carbonate (EMC), and dimethyl carbonate (DMC) were mixed at a predetermined volume ratio. To this mixed solvent, $LiPF_6$ was added to obtain a non-aqueous electrolyte liquid.

[Production of Test Cell (Non-Aqueous Electrolyte Secondary Battery)]

The above positive electrode to which a positive electrode lead made of aluminum was attached and the above negative electrode to which a negative electrode lead made of nickel was attached were spirally wound with a separator made of polyethylene interposed therebetween, and formed into a flat shape to produce a wound electrode assembly. This electrode assembly was housed in an exterior composed of an aluminum laminate, the above non-aqueous electrolyte liquid was injected thereinto, and an opening of the exterior was then sealed to produce a test cell for evaluation.

[Evaluation of DCR Increase Rate]

Under a temperature environment of 25°C, the produced test cell was charged at a constant current of 0.5 It until a battery voltage reached 4.2 V, and then charged at a low voltage of 4.2 V until a current value reached 1/50 It. Subsequently, the test cell was discharged at a current of 0.5 It to measure a voltage before the discharge and a voltage after 10 seconds from the beginning of the discharge. A DCR before a storage test was calculated with the following formula.

$$DCR\ (\Omega) = (\text{Voltage before Discharge - Voltage after 10 Seconds from Beginning of Discharge})/\text{Current Value}$$

Thereafter, the test cell was charged at a constant current of 0.5 It until the battery voltage reached 4.2 V, then charged at a low voltage of 4.2 V until the current value reached 1/50 It, and then left to stand under a high-temperature environment at 60°C for 45 days. A DCR of the test cell after the storage was calculated with the above method to calculate a DCR increase rate after the storage. Table 1 shows the evaluation results.

The DCR increase rate shown in Table 1 is a relative value relative to a DCR increase rate of a test cell of Comparative Example 1, described later.

<Example 2>

A test cell was produced and the DCR increase rate was evaluated in the same manner as in Example 1 except that zirconium ammonium carbonate was added instead of tungsten oxide in the synthesis of the positive electrode active material.

<Example 3>

A test cell was produced and the DCR increase rate was evaluated in the same manner as in Example 1 except that boron oxide was added instead of tungsten oxide in the synthesis of the positive electrode active material.

<Example 4>

A test cell was produced and the DCR increase rate was evaluated in the same manner as in Example 1 except that aluminum nitrate was added instead of tungsten oxide in the synthesis of the positive electrode active material.

<Example 5>

A test cell was produced and the DCR increase rate was evaluated in the same manner as in Example 1 except that niobium hydroxide was added instead of tungsten oxide in the synthesis of the positive electrode active material.

<Example 6>

A test cell was produced and the DCR increase rate was evaluated in the same manner as in Example 1 except that zirconium ammonium carbonate was added in addition to tungsten oxide in the synthesis of the positive electrode active material.

<Example 7>

A test cell was produced and the DCR increase rate was evaluated in the same manner as in Example 1 except that boron oxide was added in addition to tungsten oxide in the synthesis of the positive electrode active material.

<Example 8>

A test cell was produced and the DCR increase rate was evaluated in the same manner as in Example 1 except that aluminum nitrate was added in addition to tungsten oxide in the synthesis of the positive electrode active material.

<Example 9>

A test cell was produced and the DCR increase rate was evaluated in the same manner as in Example 1 except that niobium hydroxide was added in addition to tungsten oxide in the synthesis of the positive electrode active material.

<Examples 10 to 18>

Test cells were produced and the DCR increase rate was evaluated in the same manner as in Examples 1 to 9, respectively, except that strontium hydroxide was added instead of calcium hydroxide in the synthesis of the positive electrode active material.

<Examples 19 to 36>

Test cells were produced and the DCR increase rate was evaluated in the same manner as in Examples 1 to 18, respectively, except that a composite oxide containing Ni, Al, and Mn (a molar ratio between Ni, Al, and Mn was 93.75:3:3) was used instead of the composite oxide containing Ni, Co, and Al in the synthesis of the positive electrode active material.

<Comparative Example 1>

A test cell was produced and the DCR increase rate was evaluated in the same manner as in Example 1 except that neither calcium hydroxide nor tungsten oxide was added in the synthesis of the positive electrode active material.

<Comparative Example 2>

A test cell was produced and the DCR increase rate was evaluated in the same manner as in Example 1 except that no tungsten oxide was added in the synthesis of the positive electrode active material.

<Comparative Example 3>

A test cell was produced and the DCR increase rate was evaluated in the same manner as in Example 10 except that no tungsten oxide was added in the synthesis of the positive electrode active material.

<Comparative Examples 4 to 8>

Test cells were produced and the DCR increase rate was evaluated in the same manner as in Examples 1 to 5, respectively, except that no calcium hydroxide was added in the synthesis of the positive electrode active material.

<Comparative Example 9>

A test cell was produced and the DCR increase rate was evaluated in the same manner as in Example 19 except that neither calcium hydroxide nor tungsten oxide was added in the synthesis of the positive electrode active material.

<Comparative Example 10>

A test cell was produced and the DCR increase rate was evaluated in the same manner as in Example 20 except that no tungsten oxide was added in the synthesis of the positive electrode active material.

<Comparative Example 11>

A test cell was produced and the DCR increase rate was evaluated in the same manner as in Example 28 except that no tungsten oxide was added in the synthesis of the positive electrode active material.

<Comparative Examples 12 to 16>

Test cells were produced and the DCR increase rate was evaluated in the same manner as in Examples 19 to 23, respectively, except that no calcium hydroxide was added in the synthesis of the positive electrode active material.

[Table 1]

| | Positive electrode active material | | | | | | | | | | | | Evaluation |
| | Major metal elements (mol%/active material) | | | | Element A (mol%/active material) | | Element B (mol%/Ni mol) | | | | | Full width at half maximum of (208) plane | DCR increase rate after storage |
| | Ni | Co | Al | Mn | Ca | Sr | W | Zr | B | Al | Nb | | |
|---|---|---|---|---|---|---|---|---|---|---|---|---|---|
| Example 1 | 91.75 | 4 | 4 | - | 0.25 | - | 0.1 | - | - | - | - | 0.45 | 81 |
| Example 2 | 91.75 | 4 | 4 | - | 0.25 | - | - | 0.1 | - | - | - | 0.46 | 83 |
| Example 3 | 91.75 | 4 | 4 | - | 0.25 | - | - | - | 0.1 | - | - | 0.44 | 80 |
| Example 4 | 91.75 | 4 | 4 | - | 0.25 | - | - | - | - | 0.1 | - | 0.45 | 82 |
| Example 5 | 91.75 | 4 | 4 | - | 0.25 | - | - | - | - | - | 0.1 | 0.44 | 84 |
| Example 6 | 91.75 | 4 | 4 | - | 0.25 | - | 0.1 | 0.1 | - | - | - | 0.41 | 77 |
| Example 7 | 91.75 | 4 | 4 | - | 0.25 | - | 0.1 | - | 0.1 | - | - | 0.44 | 77 |
| Example 8 | 91.75 | 4 | 4 | - | 0.25 | - | 0.1 | - | - | 0.1 | - | 0.47 | 78 |
| Example 9 | 91.75 | 4 | 4 | - | 0.25 | - | 0.1 | - | - | - | 0.1 | 0.45 | 80 |
| Example 10 | 91.75 | 4 | 4 | - | - | 0.25 | 0.1 | - | - | - | - | 0.44 | 82 |
| Example 11 | 91.75 | 4 | 4 | - | - | 0.25 | - | 0.1 | - | - | - | 0.45 | 84 |
| Example 12 | 91.75 | 4 | 4 | - | - | 0.25 | - | - | 0.1 | - | - | 0.46 | 81 |
| Example 13 | 91.75 | 4 | 4 | - | - | 0.25 | - | - | - | 0.1 | - | 0.45 | 83 |
| Example 14 | 91.75 | 4 | 4 | - | - | 0.25 | - | - | - | - | 0.1 | 0.43 | 84 |
| Example 15 | 91.75 | 4 | 4 | - | - | 0.25 | 0.1 | 0.1 | - | - | - | 0.42 | 78 |
| Example 16 | 91.75 | 4 | 4 | - | - | 0.25 | 0.1 | - | 0.1 | - | - | 0.44 | 79 |
| Example 17 | 91.75 | 4 | 4 | - | - | 0.25 | 0.1 | - | - | 0.1 | - | 0.47 | 78 |
| Example 18 | 91.75 | 4 | 4 | - | - | 0.25 | 0.1 | - | - | - | 0.1 | 0.44 | 78 |
| Example 19 | 93.75 | - | 3 | 3 | 0.25 | - | 0.1 | - | - | - | - | 0.42 | 89 |
| Example 20 | 93.75 | - | 3 | 3 | 0.25 | - | - | 0.1 | - | - | - | 0.43 | 91 |
| Example 21 | 93.75 | - | 3 | 3 | 0.25 | - | - | - | 0.1 | - | - | 0.41 | 88 |
| Example 22 | 93.75 | - | 3 | 3 | 0.25 | - | - | - | - | 0.1 | - | 0.42 | 90 |
| Example 23 | 93.75 | - | 3 | 3 | 0.25 | - | - | - | - | - | 0.1 | 0.41 | 92 |
| Example 24 | 93.75 | - | 3 | 3 | 0.25 | - | 0.1 | 0.1 | - | - | - | 0.38 | 85 |
| Example 25 | 93.75 | - | 3 | 3 | 0.25 | - | 0.1 | - | 0.1 | - | - | 0.41 | 85 |
| Example 26 | 93.75 | - | 3 | 3 | 0.25 | - | 0.1 | - | - | 0.1 | - | 0.44 | 86 |
| Example 27 | 93.75 | - | 3 | 3 | 0.25 | - | 0.1 | - | - | - | 0.1 | 0.42 | 87 |
| Example 28 | 93.75 | - | 3 | 3 | - | 0.25 | 0.1 | - | - | - | - | 0.39 | 90 |
| Example 29 | 93.75 | - | 3 | 3 | - | 0.25 | - | 0.1 | - | - | - | 0.42 | 92 |
| Example 30 | 93.75 | - | 3 | 3 | - | 0.25 | - | - | 0.1 | - | - | 0.38 | 90 |
| Example 31 | 93.75 | - | 3 | 3 | - | 0.25 | - | - | - | 0.1 | - | 0.41 | 91 |
| Example 32 | 93.75 | - | 3 | 3 | - | 0.25 | - | - | - | - | 0.1 | 0.42 | 92 |
| Example 33 | 93.75 | - | 3 | 3 | - | 0.25 | 0.1 | 0.1 | - | - | - | 0.39 | 86 |
| Example 34 | 93.75 | - | 3 | 3 | - | 0.25 | 0.1 | - | 0.1 | - | - | 0.41 | 85 |
| Example 35 | 93.75 | - | 3 | 3 | - | 0.25 | 0.1 | - | - | 0.1 | - | 0.41 | 86 |
| Example 36 | 93.75 | - | 3 | 3 | - | 0.25 | 0.1 | - | - | - | 0.1 | 0.44 | 87 |
| Comparative Example 1 | 92 | 4 | 4 | - | - | - | - | - | - | - | - | 0.38 | 100 |
| Comparative Example 2 | 91.75 | 4 | 4 | - | 0.25 | - | - | - | - | - | - | 0.45 | 113 |
| Comparative Example 3 | 91.75 | 4 | 4 | - | - | 0.25 | - | - | - | - | - | 0.46 | 115 |
| Comparative Example 4 | 92 | 4 | 4 | - | - | - | 0.1 | - | - | - | - | 0.39 | 126 |
| Comparative Example 5 | 92 | 4 | 4 | - | - | - | - | 0.1 | - | - | - | 0.42 | 120 |
| Comparative Example 6 | 92 | 4 | 4 | - | - | - | - | - | 0.1 | - | - | 0.39 | 118 |
| Comparative Example 7 | 92 | 4 | 4 | - | - | - | - | - | - | 0.1 | - | 0.38 | 125 |
| Comparative Example 8 | 92 | 4 | 4 | - | - | - | - | - | - | - | 0.1 | 0.41 | 125 |
| Comparative Example 9 | 94 | - | 3 | 3 | - | - | - | - | - | - | - | 0.41 | 112 |
| Comparative Example 10 | 93.75 | - | 3 | 3 | 0.25 | - | - | - | - | - | - | 0.48 | 127 |
| Comparative Example 11 | 93.75 | - | 3 | 3 | - | 0.25 | - | - | - | - | - | 0.45 | 130 |
| Comparative Example 12 | 94 | - | 3 | 3 | - | - | 0.1 | - | - | - | - | 0.41 | 121 |
| Comparative Example 13 | 94 | - | 3 | 3 | - | - | - | 0.1 | - | - | - | 0.43 | 125 |
| Comparative Example 14 | 94 | - | 3 | 3 | - | - | - | - | 0.1 | - | - | 0.39 | 131 |
| Comparative Example 15 | 94 | - | 3 | 3 | - | - | - | - | - | 0.1 | - | 0.43 | 125 |
| Comparative Example 16 | 94 | - | 3 | 3 | - | - | - | - | - | - | 0.1 | 0.39 | 130 |

As shown in Table 1, any of the test cells of the Examples have a lower DCR increase rate after storage with charged than the test cells of the Comparative Examples, and have excellent storage characteristics. From the results shown in Table 1, it is found that using each of the positive electrode active material in which Ca or Sr (element A) is absent on the surfaces of the primary particles of the lithium-transition metal composite oxide (Comparative Examples 4 to 8 and 12 to 16), the positive electrode active material in which W, Zr, B, Al, or Nb (element B) is absent on the surfaces of the secondary particles (Comparative Examples 2, 3, 10, and 11), and the positive electrode active material in which both the elements A and B are absent (Comparative Examples 1 and 9) considerably increases the DCR after storage. In addition, the presence of only one of the elements A and B on the particle surfaces of the positive electrode active material increases the DCR after storage compared with the case where both the elements A and B are absent.

That is, it is considered that an interaction between the element A and the element B improves the stability of the active material surface to specifically inhibit the increase in the DCR after storage. In a positive electrode active material with a high Ni content, reducing the Co content is generally likely to increase the DCR. However, when both the elements A and B are present on the particle surface, the increase in the DCR may be inhibited even with a battery using a positive electrode active material with a low Co content or without Co. Therefore, the Ni proportion may be further increased, and the higher capacity may be achieved with reducing the manufacturing cost of the battery.

<Examples 37 to 39 and Comparative Example 17>

Test cells were produced and the DCR increase rate was evaluated in the same manner as in Example 19 except that the amount of the Ca raw material to be fed in the synthesis of the positive electrode active material was changed so that each of the amount of the element A was a value shown in Table 2.

<Examples 40 to 42 and Comparative Example 18>

Test cells were produced and the DCR increase rate was evaluated in the same manner as in Example 19 except that the amount of the W raw material to be fed in the synthesis of the positive electrode active material was changed so that each of the amount of the element B was a value shown in Table 2.

[Table 2]

| | Positive electrode active material | | | | | | | | | | | Evaluation | | |
| | Major metal elements (mol%/active material) | | | | Element A (mol%/active material) | | Elements (mol%/Ni mol) | | | | | Full width at half maximum of (208) plane (deg) | DCR increase rate after storage | Initial discharge capacity |
| | Ni | Co | Al | Mn | Ca | Sr | W | Zr | B | Al | Nb | | | |
| Example 19 | 93.75 | - | 3 | 3 | 0.25 | - | 0.1 | - | - | - | - | 0.42 | 89 | 100 |
| Example 37 | 93.75 | - | 3 | 3 | 0.01 | - | 0.1 | - | - | - | - | 0.44 | 110 | 99 |
| Example 38 | 93.75 | - | 3 | 3 | 0.5 | - | 0.1 | - | - | - | - | 0.43 | 88 | 100 |
| Example 39 | 93.75 | - | 3 | 3 | 1 | - | 0.1 | - | - | - | - | 0.35 | 87 | 85 |
| Example 40 | 93.75 | - | 3 | 3 | 0.25 | - | 0.05 | - | - | - | - | 0.41 | 90 | 98 |
| Example 41 | 93.75 | - | 3 | 3 | 0.25 | - | 12 | - | - | - | - | 0.44 | 93 | 98 |
| Example 42 | 93.75 | - | 3 | 3 | 0.25 | - | 2 | - | - | - | - | 0.44 | 98 | 85 |
| Comparative Example 17 | 93.75 | - | 3 | 3 | 1.5 | - | 0.1 | - | - | - | - | 0.34 | 99 | 80 |
| Comparative Example 18 | 93.75 | - | 3 | 3 | 0.25 | - | 2.5 | - | - | - | - | 0.45 | 99 | 79 |

As shown in Table 2, both of the higher capacity and good storage characteristics of the battery may be achieved when the predetermined amount of the element A is included. However, a small amount of the element A yields insufficient effect of the inhibition of the increase in the DCR, and a large amount of the element A lowers the discharge capacity of the battery although there is the effect of the DCR inhibition (Examples 19 and 37 to 39 and Comparative Example 17). Both of the higher capacity and good storage characteristics of the battery may be achieved when the predetermined amount of the element B is included. However, a large amount of the element B lowers the discharge capacity of the battery although there is the effect of the DCR inhibition (Examples 19 and 40 to 42 and Comparative Example 18). Therefore, regulating the amounts of the element A and the element B within the appropriate amounts is associated with the higher capacity and good storage characteristics of the battery.

REFERENCE SIGNS LIST

10 Non-aqueous electrolyte secondary battery
11 Positive electrode
12 Negative electrode
13 Separator
14 Electrode assembly
16 Exterior housing can
17 Sealing assembly
18, 19 Insulating plate
20 Positive electrode lead
21 Negative electrode lead
22 Groove
23 Internal terminal plate
24 Lower vent member
25 Insulating member
26 Upper vent member
27 Cap
28 Gasket
30 Positive electrode core
31 Positive electrode mixture layer
35 Lithium-transition metal composite oxide (Composite oxide)
36 Primary particle
36A, 37B Coating layer
37 Secondary particle
40 Negative electrode core
41 Negative electrode mixture layer

**Claims**

1.  A positive electrode active material for a non-aqueous electrolyte secondary battery, including a lithium-transition metal composite oxide, the lithium-transition metal composite oxide containing 80 mol% or more of Ni based on a total number of moles of metal elements excluding Li, and at least one selected from the group consisting of Co, Mn, Al, Ti, Nb, Fe, and Zn, and having a Co content of less than 5 mol%, wherein

    the lithium-transition metal composite oxide includes secondary particles each formed by aggregation of primary particles,
    at least one element A selected from the group consisting of Ca and Sr is present on surfaces of the primary particles in an amount of 0.01 mol% or more and 1 mol% or less based on the total number of moles of the metal elements excluding Li, and
    at least one element B selected from the group consisting of B, Zr, W, Al, Nb, Mo, and Ti is present on surfaces of the secondary particles in an amount of 0.05 mol% or more and 2 mol% or less based on a total number of moles of Ni in the composite oxide.

2.  The positive electrode active material for a non-aqueous electrolyte secondary battery according to claim 1, wherein the element B is present outside the element A on the surfaces of the secondary particles.

3. The positive electrode active material for a non-aqueous electrolyte secondary battery according to claim 2, wherein the element B is substantially absent inside the secondary particles and present only on the surfaces of the secondary particles.

4. The positive electrode active material for a non-aqueous electrolyte secondary battery according to any one of claims 1 to 3, wherein a content of the element B is 1.2 mol% or less based on the total number of moles of Ni in the composite oxide.

5. The positive electrode active material for a non-aqueous electrolyte secondary battery according to any one of claims 1 to 4, wherein a ratio of a content of the element B to a content of the element A is 0.05 or more and 200 or less.

6. The positive electrode active material for a non-aqueous electrolyte secondary battery according to any one of claims 1 to 5, wherein a full width at half maximum n of a diffraction peak of a (208) plane in an X-ray diffraction pattern of the lithium-transition metal composite oxide is $0.30° < n < 0.55°$.

7. A non-aqueous electrolyte secondary battery, comprising:

   a positive electrode including the positive electrode active material according to any one of claims 1 to 6;
   a negative electrode; and
   a non-aqueous electrolyte.

# Figure 1

Figure 2

| **INTERNATIONAL SEARCH REPORT** | International application No. |
|---|---|
| | PCT/JP2021/015959 |

A.    CLASSIFICATION OF SUBJECT MATTER
Int.Cl. H01M4/525(2010.01)i, C01G53/00(2006.01)i
FI: H01M4/525, C01G53/00A

According to International Patent Classification (IPC) or to both national classification and IPC

B.    FIELDS SEARCHED

Minimum documentation searched (classification system followed by classification symbols)
Int.Cl. H01M4/525, C01G53/00

Documentation searched other than minimum documentation to the extent that such documents are included in the fields searched
        Published examined utility model applications of Japan        1922-1996
        Published unexamined utility model applications of Japan      1971-2021
        Registered utility model specifications of Japan              1996-2021
        Published registered utility model applications of Japan      1994-2021

Electronic data base consulted during the international search (name of data base and, where practicable, search terms used)
        CAplus/REGISTRY(STN)

C.    DOCUMENTS CONSIDERED TO BE RELEVANT

| Category* | Citation of document, with indication, where appropriate, of the relevant passages | Relevant to claim No. |
|---|---|---|
| A | JP 2002-164053 A (SAMSUNG SDI CO., LTD.) 07 June 2002 (2002-06-07) | 1-7 |
| A | JP 9-17430 A (TORAY INDUSTRIES, INC.) 17 January 1997 (1997-01-17) | 1-7 |
| A | JP 5341325 B2 (NIPPON CHEMICAL INDUSTRIAL CO., LTD.) 13 November 2013 (2013-11-13) | 1-7 |

☐    Further documents are listed in the continuation of Box C.        ☒    See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
|      17 June 2021 |      29 June 2021 |

| Name and mailing address of the ISA/ | Authorized officer |
|---|---|
|      Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/015959

| | | |
|---|---|---|
| JP 2002-164053 A | 07 June 2002 | US 6984469 B2<br>KR 10-2002-0024520 A<br>CN 1357932 A |
| JP 9-17430 A | 17 January 1997 | US 5679481 A<br>EP 712172 A2<br>CN 1139299 A<br>KR 10-1996-0019833 A<br>CA 2162456 A1 |
| JP 5341325 B2 | 13 November 2013 | US 2011/0020704 A1<br>WO 2009/014158 A1<br>EP 2178138 A1<br>KR 10-2010-0049556 A<br>CN 101765934 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016091626 A
- WO 2010535699 A